# EUROPÄISCHE PATENTSCHRIFT

(11) **EP 3 098 522 B1**
(45) Veröffentlichungstag und Bekanntmachung des Hinweises auf die Patenterteilung: **01.08.2018**
(21) Anmeldenummer: 16166695.3
(22) Anmeldetag: 22.04.2016
(51) Int. Cl.: F24D 17/00, F16K 31/00, F16K 51/02

(54) **WARMWASSERZIRKULATIONSSYSTEM MIT EINEM SMA GESTEUERTEN VENTIL**
HOT WATER CIRCULATION SYSTEM WITH AN SMA CONTROLLED VALVE
SYSTEME DE CIRCUIT D'EAU CHAUDE COMPRENANT UNE SOUPAPE COMMANDEE SMA

(30) Priorität: 24.05.2015 DE 202015003030 U
(43) Veröffentlichungstag der Anmeldung: 30.11.2016
(73) Patentinhaber: Gebr. Kemper GmbH + Co. KG Metallwerke, 57462 Olpe (DE)
(72) Erfinder: Blumenthal, Roland, 50374 Erftstadt (DE)
(74) Vertreter: Grünecker Patent- und Rechtsanwälte PartG mbB

(56) Entgegenhaltungen:
- EP-A2- 0 304 944
- EP-A2- 0 693 406
- DE-A1- 3 522 344
- DE-A1- 19 631 403
- DE-A1- 19 753 101
- DE-C1- 10 226 289
- DE-T5-112011 104 549
- JP-A- 2010 025 363
- JP-A- 2011 196 563
- JP-A- 2011 226 653

## Beschreibung

Die vorliegende Erfindung betrifft ein Warmwasserzirkulationssystem gemäß den oberbegrifflichen Merkmalen von Anspruch 1. Ein solches Warmwasserzirkulationssystem ist aus der DE 35 22 344 A1 bekannt.

Bei einem solchen Warmwasserzirkulationssystem wird in einem Wassererwärmer (z.B. Speicher, Durchlauferwärmer) Wasser erhitzt und in einer Zirkulationsleitung mittels einer Zirkulationspumpe umgewälzt. Dadurch können gegebenenfalls andere Teile des Zirkulationssystems bevorzugt mit Warmwasser versorgt werden, falls diese ein zu geringes Temperaturniveau aufweisen. So wird zum einen eine mikrobiologische Verkeimung verhindert, welche insbesondere bei warmem, in Rohrleitungen stehendem Wasser mit einer mittleren Temperatur problematisch ist. Zum anderen gewährleistet die Zirkulation des warmen Wassers, dass bei Nutzung, d.h. Entnahme von warmem Wasser an einen Verbraucher, welcher üblicherweise über eine zu dem Verbraucher führende Rohrleitung an die Zirkulationsleitung angeschlossen ist, bereits unmittelbar oder zumindest relativ schnell, z.B. innerhalb weniger Sekunden, warmes Wasser bereitsteht.

Gemäß des DVGW-Arbeitsblattes W551 ist für Kleinanlagen, d.h. Warmwasserzirkulationssysteme in Ein- und/oder Zweifamilienhäusern, empfohlen, die Betriebstemperatur des Wassererwärmers auf 60 °C einzustellen, wobei Betriebstemperaturen unter 55 °C auf jeden Fall vermieden werden sollten. Diese Einstellung am Wassererwärmer gewährleistet auch in solchen Kleinanlagen eine ausreichend hohe Wassertemperatur von ca. 55 °C.

Diese vorgegebene Zirkulationstemperatur wird insbesondere in mittleren und großen Anlagen in Mehrfamilienhäusern oder öffentlichen Gebäuden über ein in die Zirkulationsleitung eingesetztes Regulierventil (sogenanntes Zirkulationsregulierventil) gewährleistet, welches selbsttätig in Abhängigkeit der Temperatur des das Regulierventil anströmenden Wassers den Volumenstrom steuert, in dem ein zwischen einem Ventilsitz und einem Ventilkörper gebildeter Durchgang in dessen Durchgangsfläche entsprechend vergrößert oder verkleinert wird. Es wird also der Durchflusswiderstand durch das Ventil temperaturabhängig gesteuert. Ein solches Ventil ist beispielsweise aus der DE 102 26 289 C1 der Anmelderin bekannt.

Bei Erhöhung des Durchflusswiderstandes durch das Ventil wird der durch das Ventil strömende Volumenstrom und damit auch der Volumenstrom in dem Teil der Zirkulationsleitung, in dem sich dieses Ventil befindet, verringert. Das Zirkulationssystem besteht aus einem geschlossenen Ringsystem mit Verzweigungen, wobei derjenige Teil des Systems vom Wassererwärmer zum Verbraucher als Versorgungsleitung und derjenige Teil vom Verbraucher zurück zum Wassererwärmer als Zirkulationsleitung dient. Die Zirkulationspumpe wird in der Nähe des Wassererwärmers in der Zirkulationsleitung platziert.

Insbesondere bei Großanlagen ab einem Speicherinhalt von 400 Liter und/oder über 3 Liter Rohrinhalt (der Zirkulationsleitung) ist zudem gemäß DVGW-Arbeitsblatt W551 eine einmalige Aufheizung innerhalb von 24 Stunden gefordert. Diese so genannte Legionellenschaltung (periodische Desinfektion) ist eine thermische Desinfektion. Dabei werden der Wassererwärmer und das in der Zirkulationsleitung zirkulierende Wasser für mindestens 3 Minuten auf mindestens 70 °C erhitzt.

In diesem Fall wird das Ventil, welches üblicherweise bei der vorgegebenen Zirkulationstemperatur mit maximaler Drosselung, d.h. maximal erhöhtem Durchflusswiderstand betrieben wurde, zumindest teilweise wieder geöffnet, d.h. der Durchflusswiderstand wird zumindest ein wenig erniedrigt, um einen höheren Volumenstrom zu gewährleisten, der für die thermische Desinfektion benötigt wird.

In bekannten Regulierventilen wird die temperaturabhängige Regulierung des kᵥ-Wertes (Durchfluss in m³/h bei 1 bar Druckdifferenz) über sogenannte Dehnstoffelemente gewährleistet. Diese Dehnstoffelemente sind mit einem Spezialwachs gefüllt und nutzen die thermische Ausdehnung dieses Wachses aus. Das Wachs drückt zum Beispiel über eine Membran auf einen Kolben, der wiederum das eigentliche Stellglied bewegt. Das Wachs zeigt üblicherweise ein gut reproduzierbares Ausdehnungsverhalten und zusammen mit der Konstruktion des Dehnstoffelements sind nutzbare Gesamteigenschaften zu erzielen.

Es zeigt sich jedoch, dass aufgrund unbestimmter Umstände die Fertigungsqualität streuen kann und die Reproduzierbarkeit von Dehnstoffelementen sowohl innerhalb einer Charge als auch insbesondere zwischen verschiedenen Chargen nicht immer gegeben ist. Die Reguliergenauigkeit des Regulierventils ist damit nicht in dem erforderlichen Maße gegeben.

Ausgehend von diesem Problem schlägt die vorliegende Erfindung ein Warmwasserzirkulationssystem gemäß Anspruch 1 vor.

Als Reguliermodul ist ein modulares Bauteil zu sehen, welches in die Zirkulationsleitung eingesetzt werden kann. Demnach hat dieses Reguliermodul üblicherweise einen Einlass- bzw. einen Auslassstutzen zum Anschluss an die Zirkulationsleitung. Weitere Funktionselemente, wie beispielsweise eine Temperaturmesseinrichtung, ein manuelles Absperrventil, eine Durchflussmesseinrichtung, ein Probenahmeventil oder ein Rückschlagventil können innerhalb dieses, insbesondere als einheitlicher Gusskörper, insbesondere aus Rotguss, hergestellten Reguliermodulgehäuses vorgesehen sein.

Das erfindungsgemäße Warmwasserzirkulationssystem unterscheidet sich vom vorbekannten Stand der Technik dahingehend, dass das Stellelement zumindest einen SMA-Werkstoff (Shape Memory Alloy, Formgedächtnislegierung) enthält.

Solche SMA-Werkstoffe bzw. Formgedächtnislegierungen sind spezielle Metalle, die in zwei unterschiedlichen Kristallstrukturen existieren können. Beispiele für solche SMA-Werkstoffe sind NiTi, CuZnAl, CuAlNi, FeMnSi, FeNiCoTi, ZnAuCu, FeNiAl, CuZn oder NiTiCu und deren Mischungen. Die Verwendung von SMA-Werkstoffen in Regulierventilen als solche ist beispielsweise aus der EP 0 304 944 A2, der JP 2010 025363 A oder der JP 2011 226653 A bekannt.

SMA-Werkstoffe ändern in Abhängigkeit der Temperatur ihre Struktur. Die Formumwandlung basiert damit auf der temperaturabhängigen Gitterumwandlung zu einer dieser beiden Kristallstrukturen (allotrope Umwandlung). Es gibt in der Regel die Austenit genannte Hochtemperaturphase und die Martensit genannte Niedertemperaturphase. Die Strukturumwandlung ist unabhängig von der Geschwindigkeit der Temperaturänderung. Zur Einleitung der Phasenumwandlung sind die Parameter Temperatur und mechanische Spannung gleichwertig, d.h. die Umwandlung kann nicht nur thermisch, sondern auch durch mechanische Spannungen herbeigeführt werden.

Solche Formgedächtnislegierungen brauchen in jedem Kristallsystem eine Reihe gleichberechtigter Schersysteme, die sich aus der Raumsymmetrie der Elementarzelle ergeben. Sind alle Scherungen bei einer Umwandlung gleich verteilt, ist keine äußere Formänderung zu erkennen. Werden aber beispielsweise durch äußere Kräfte nur einige Schersysteme bevorzugt, werden Formänderungen beobachtet.

Als Stellelement ist jede Funktionalität zu verstehen, die in vorgegebener Weise mittels eines SMA-Werkstoffes die Durchflusswiderstandscharakteristik des Ventils ändert, insbesondere auf den Ventilkörper wirkt. Das Stellelement für sich kann insbesondere einteilig oder auch mehrteilig aus mehreren, miteinander in Wechselwirkung stehenden, Baugruppen ausgebildet sein. Jedoch beinhaltet das Stellelement zumindest einen Bereich, der aus einem SMA-Werkstoff gebildet ist, durch dessen temperaturbedingte Phasenumwandlung das Stellelement den Ventilkörper stellt.

Das Stellelement enthält mehrere Federelemente, die jeweils einen SMA-Werkstoff enthalten, vorzugsweise in seiner Gänze aus dem jeweiligen SMA-Werkstoff ausgebildet sind. Ein Federelement ist hier insbesondere eine Einheit, d.h. ein Teil, welches in dem Reguliermodul gehalten ist. Ein solches Federelement hat demnach federnde Eigenschaften und - soweit es aus einem SMA-Werkstoff ist - ändert seine Längenausdehnung aufgrund der Phasenumwandlung des SMA-Werkstoffes in einem vorgegebenen Temperaturbereich. Insbesondere ist ein solches Federelement als Spiralfeder ausgebildet. Diese stützt sich vorzugsweise mit einem ersten Ende federnd an den Ventilkörper und mit einem dem ersten Ende entgegengesetzten zweiten Ende z.B. an einer feststehenden Wand, insbesondere innerhalb des Reguliermoduls, ab.

Das erfindungsgemäße Wasserzirkulationssystem ist insbesondere ein System, welches den Vorgaben nach dem DVGW-Arbeitsblatt W551 entspricht und welches sicherstellt, dass die Temperatur in dem Versorgungssystem an keiner Stelle geringer als 55°C ist. Davon sind allerdings ausgenommen Stockwerksleitungen mit einem Wasservolumen größer 3l, wenn von Hygenikern oder Betreibern von Rohrleitungssystemen keine zusätzlichen, erhöhten Anforderungen zur sofortigen hohen Temperaturpräsenz gefordert sind. Das Wasserzirklulationssystem ist dabei aufgrund des Regelverhaltens des wenigstens einen oder der mehreren Reguliermodule so ausgebildet, dass die vorerwähnte Anforderung einer Temperatur von nicht weniger als 55°C erfüllt wird. Auch ist durch Auslegung sichergestellt, dass die Temperatur in dem Wasserzirkulationssystem an keiner Stelle nicht mehr als 5°C gegenüber der Austrittstemperatur des Wassererwärmers absinkt. Das Warmwasserzirkulationssystem ist vorzugsweise ein Trinkwassersystem mit einer Entnahmestelle als Verbraucher zum Bezug von Warmwasser. Eine solche Entnahmestelle kann bspw. ein Waschbecken oder eine Dusche sein.

Dabei befindet sich das Reguliermodul nach dem erfindungsgemäßen Wasserzirkulationssystem in einem Zirkulationsrohrstrang, der von dem Verbraucher wegführt und diesen über eine Pumpe mit dem Wassererwärmer verbindet. Der Zirkulationsrohrstrang hat dabei gegenüber einer Versorgungsleitung, die zu dem Verbraucher hinführt, einen verminderten Querschnitt. Der Strömungsquerschnitt des Zirkulationsrohrstranges ist um zumindest 20% bevorzugt, um zumindest 30% kleiner als der Durchmesser der Versorgungsleitung zum Verbraucher. Der Nenndurchmesser der Zirkulationsleitung ist in der Regel zwischen 30% und 60% kleiner als der Nenndurchmesser der Versorgungsleitung. Dabei kann die Versorgungsleitung mit einem Nenndurchmesser von 20, 25 oder 32 vorgesehen sein, während die Zirkulationsleitung eine Nennweite von 12 haben kann. Bei einer Nennweite der Versorgungsleitung von 40 hat die Zirkulationsleitung bspw. eine Nennweite von 20. Bei einer Nennweite der Versorgungsleitung von 50, 65 oder 80 kann die Zirkulationsleitung eine Nennweite von 25 haben. Bei einer Nennweite von 100 der Versorgungsleitung wird die Zirkulationsleitung bspw. mit einer Nennweite von 32 vorgesehen. Insbesondere gelten die Richtwerte für Nennweiten von Zirkulations-Sammelleitungen nach DIN 1988 Teil 3. Bei dem erfindungsgemäßen Wasserzirkulationssystem befindet sich das Reguliermodul innerhalb der Zirkulationsleitung und stellt abhängig von der Temperatur des in dieser fließenden Wassers den Durchflusswiderstand ein, um sicherzustellen, dass die Anforderungen nach dem DVGW-Arbeitsblatt W551 bzgl. der absoluten Temperatur von nicht weniger als 55°C und der maximalen Temperaturdifferenz zwischen dem Austritt aus dem Wassererwärmer und der Temperatur in dem System von nicht mehr als 5°C eingehalten werden.Ein Warmwassererwärmer im Sinne der Erfindung führt dem Wasser üblicherweise über einen Wärmetauscher Energie in Form von Wärme zu.

Ein erstes SMA-Werkstofffederelement wirkt derart mit dem Ventilkörper zusammen, dass der Durchflusswiderstand durch das Ventil in einem ersten vorgegebenen Temperaturbereich mit steigender Temperatur des durch das Ventil fließenden Wassers erhöht wird.

Soweit das erste Federelement einen SMA-Werkstoff mit einem Zweiweg-Memory-Effekt aufweist, reicht zur Stellung des ersten Federelementes bei steigender und bei fallender Temperatur ein einziges Federelement aus. Denn Zweiweg-Memory-Effekt-Legierungen können sich an ihre Form bei hoher und bei niedriger Temperatur "erinnern". Damit das entsprechende Federelement beim Abkühlen seine definierte Ursprungsform wieder einnimmt, muss es durch thermomechanische Behandlungszyklen trainiert werden. Nach bei Erwärmung stattfindender Ausdehnung kehrt das Material beim Abkühlen wieder selbstständig in seine ursprüngliche Form zurück.

Soweit es sich bei dem ersten Federelement um einen SMA-Werkstoff mit einem Einweg-Memory-Effekt handelt, sollte ein zweites Federelement, vorzugsweise aus einem Nicht-SMA-Werkstoff vorgesehen sein (erstes Nicht-SMA-Werkstofffederelement), welches mit dem ersten Federelement zur Stellung des Ventils zusammenwirkt. Denn ein SMA-Werkstoff mit einem Einweg-Memory-Effekt gestattet nur eine einmalige Formänderung. Das erneute Abkühlen bewirkt keine Formänderung, nur eine intrinsische Gitteränderung. Um die Formgedächtnislegierung zur Stellung des Ventilkörpers optimal zu nutzen, muss das Federelement wieder in seine Kaltform zurückkehren. Dies kann durch das erste Nicht-SMA-Werkstofffederelement gewährleistet werden.

Insbesondere der SMA-Werkstoff des ersten SMA-Werkstofffederelementes ist dabei so gewählt, dass aufgrund seiner Phasenumwandlung das Stellelement den Ventilkörper derart stellt, dass der Durchflusswiderstand durch das Ventil in dem ersten Temperaturbereich zwischen 30 und 65 °C, vorzugsweise zwischen 30 und 50 °C oder alternativ zwischen 50 und 65 °C, erhöht, vorzugsweise mit steigender Temperatur linear erhöht, wird. Der durch das Ventil fließende Volumenstrom und damit auch der in diesem Teil der Zirkulationsleitung zirkulierende Volumenstrom wird dabei reduziert. Vorzugsweise ist das Ventil derart ausgestaltet, dass bei temperaturbedingter maximaler Ausdehnung des SMA-Werkstoffs noch ein Restvolumenstrom durch den zwischen Ventilsitz und Ventilkörper gebildeten Durchgang fließen kann. Diese maximale Drosselung des Ventils ist vorzugsweise bei einer Temperatur zwischen 53 und 63 °C, insbesondere bei ca. 55 °C oder alternativ bei ca. 60 °C erreicht (erster Temperaturbereich).

Ein zweites SMA-Werkstofffederelement stellt das Stellelement des Ventilkörpers derart, dass insbesondere nach der zuvor erwähnten maximalen Drosselung, der Durchflusswiderstand des Ventils zumindest teilweise wieder erniedrigt wird. Eine teilweise Erniedrigung bedeutet, dass das Ventil im Vergleich zu einer Ausgangsstellung, in der es sich unterhalb der vorgegebenen Temperatur, ab der der Durchflusswiderstand erhöht wird (also zu Beginn der ersten Verstellung), befindet, einen erhöhten indes im Vergleich zur maximalen Drosselung einen erniedrigten Durchflusswiderstand aufweist.

Das zweite SMA-Werkstofffederelement wirkt vorzugsweise derart mit dem Ventilkörper zusammen, dass der Durchflusswiderstand durch das Ventil in einem zweiten vorgegebenen Temperaturbereich mit steigender Temperatur des durch das Ventil fließenden Wassers erniedrigt wird. Der zweite Temperaturbereich liegt vorzugsweise höher als der erste Temperaturbereich. Insbesondere liegt der zweite Temperaturbereich bzw. der zweite Verstellungsbereich bei einer Temperatur von 63 °C bis 75 °C, insbesondere bei 65 °C bis 70 °C, oder alternativ bei höheren Temperaturen als 70 °C. Oberhalb des zweiten Temperaturbereiches ist das Ventil derart eingestellt, dass ein konstanter Durchflusswiderstand gewährleistet ist. Innerhalb oder oberhalb des zweiten Temperaturbereiches wird bei niedriger, jedoch nicht maximaler Drosselung, die an sich bekannte thermische Desinfektion durchgeführt. Der zweite Temperaturbereich ist bevorzugt der für die thermische Desinfektion gewünschte Temperaturbereich, insbesondere gem. DVGW-Arbeitsblatt W551, in dem Legionellen aufgrund des heißen Wassers abgetötet werden.

Soweit es sich bei dem zweiten Federelement auch um einen Zweiweg-Memory-Effekt SMA-Werkstoff handelt, muss kein weiteres z.B. zweites Nicht-SMA-Werkstofffederelement vorgesehen werden. Soweit ein Einweg-Memory-Effekt Material verwendet wird, ist ein zweites Nicht-SMA-Werkstofffederelement vorteilhaft.

Die beiden zuvor genannten Funktionalitäten, d.h. die Erhöhung des Durchflusswiderstandes bei zunehmender Temperatur (erster Temperaturbereich) im Falle des ersten SMA-Werkstofffederelementes und die Erniedrigung des Durchflusswiderstandes bei zunehmender Temperatur (zweiter Temperaturbereich) im Falle des zweiten SMA-Werkstofffederelementes können auch für sich unabhängig voneinander jeweils alternativ oder zusätzlich vorgesehen sein. Soweit es auf die Temperaturbereiche ankommt, können diese in Abhängigkeit der Anforderungen auch getauscht werden, d.h. im ersten Temperaturbereich erniedrigt sich der Durchflusswiderstand und im zweiten Temperaturbereich erhöht sich der Durchflusswiderstand.

Nach der vorliegenden Erfindung ist an dem Reguliermodul ein Einstellelement vorgesehen, über welches die Verstellcharakteristik des Ventils eingestellt werden kann, so z.B. die jeweils vorgegebenen Soll-Temperaturen, bei denen jeweils eine Änderung des Strömungswiderstand eintritt, die vorgegebene Zirkulationstemperatur, sowie die vorgegebene Desinfektionstemperatur. Erfindungsgemäß wirkt das Einstellelement derart auf das erste und/oder zweite SMA-Werkstofffederelement ein, dass der erste und/oder der zweite Temperaturbereich in dessen Weite und/oder in dessen oberen und/oder unteren Grenztemperatur veränderbar ist.

Im einfachsten Fall ist das Einstellelement ein mittels Hand zu betätigendes Drehelement, welches aufgrund einer händischen Drehung eine Längsverschiebung des Ventilkörpers gewährleistet. Alternativ kann jedoch ein elektrisches und/oder über eine Computerschnittstelle steuerbares Element vorgesehen sein.

Das Reguliermodul kann auch für sich eine selbstständige Erfindung bilden.

Bevorzugte Weiterbildungen des erfindungsgemäßen Wasserzirkulationssystems sind in den abhängigen Ansprüchen angegeben.

Bzgl. der Anordnung des SMA-Werkstofffederelementes und des Nicht-SMA-Werkstofffederelementes können verschiedene Modifikationen verwirklicht sein. So kann der Ventilkörper zwischen dem ersten SMA-Werkstofffederelement und dem ersten Nicht-SMA-Werkstofffederelement und/oder zwischen dem zweiten SMA-Werkstofffederelement und dem zweiten Nicht-SMA-Werkstofffederelement vorgesehen sein. Alternativ kann der Ventilkörper auch zwischen dem ersten SMA-Werkstofffederelement und dem zweiten SMA-Werkstofffederelement vorgesehen sein. Ein Ende des ersten SMA-Werkstofffederelementes und/oder ein erstes Ende des Nicht-SMA-Werkstofffederelementes und/oder ein erstes Ende des zweiten SMA-Werkstofffederelementes und/oder ein erstes Ende des zweiten Nicht-SMA-Werkstofffederelementes können sich an dem Ventilkörper abstützen. Das jeweils andere Ende der zuvor erwähnten Federelemente kann sich dabei an einer feststehenden Wandung, insbesondere eines Reguliermodulgehäuses abstützen. Das erste SMA-Werkstofffederelement kann parallel und in Verlängerung zu dem ersten Nicht-SMA-Werkstofffederelement angeordnet sein. Das zweite SMA-Werkstofffederelement kann parallel und in Verlängerung zu dem zweiten Nicht-SMA-Werkstofffederelement angeordnet sein. Das erste SMA-Werkstofffederelement kann konzentrisch zu dem zweiten Nicht-SMA-Werkstofffederelement angeordnet sein. Die unterschiedlichen Federelemente sind üblicherweise konzentrisch zueinander und in Verlängerung vorgesehen, d. h. mechanisch in Reihe geschaltet.

Einzelheiten und Vorteile der Erfindung ergeben sich aus den nachfolgend beschriebenen Ausführungsbeispielen in Verbindung mit der Zeichnung. In dieser zeigen:
- Figur 1: eine schematische Darstellung eines Warmwasserzirkulationssystems;
- Figur 2: ein in das in Figur 1 dargestellte Warmwasserzirkulationssystem eingesetztes Reguliermodul in vergrößerter Darstellung sowie
- Figur 3: ein Diagramm zum Regelverhalten eines Ausführungsbeispiels eines in ein Warmwasserzirkulationssystem eingesetzten Reguliermoduls.

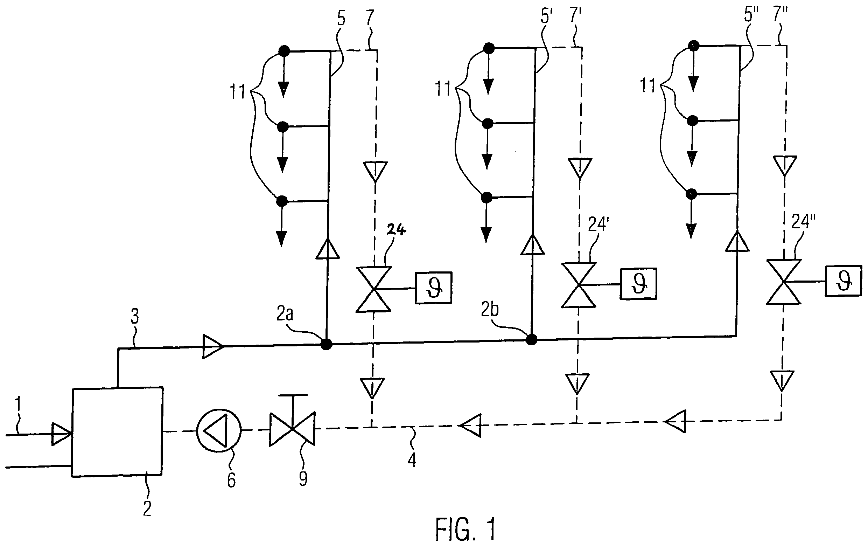

Figur 1 zeigt ein Warmwasserzirkulationssystem. Hierbei sind an einen über eine Frischwasserzuleitung 1 mit Trinkwasser versorgten Trinkwassererwärmer 2 eine Versorgungsleitung 3 und eine Zirkulationsleitung 4 angeschlossen.

Die Versorgungsleitung 3 weist Verzweigungen 2a, 2b auf, über die das in dem Warmwassererwärmer 2 erwärmte Wasser vermittelt durch entsprechende Zuleitungsrohrstränge 5, 5', 5" Verbrauchern 11 zugeleitet wird. Vorliegend sind drei Zuleitungsrohrstränge 5, 5', 5" vorgesehen, an denen je drei Verbraucher 11 angeschlossen sind. Hinter dem in Flussrichtung letzten Verbraucher 11 des jeweiligen Zuleitungsrohrstranges 5, 5', 5" ist jeweils ein Zirkulationsrohrstrang 7, 7', 7" angeschlossen, der zu der Zirkulationsleitung 4 führt und über den der jeweilige Zuleitungsrohrstrang 5, 5', 5" mit der Zirkulationsleitung 4 strömungsmäßig kommuniziert. Die entsprechenden in Figur 1 schematisch dargestellten Dreiecke (Pfeile) in der Versorgungsleitung 3, den Zuleitungsrohrsträngen 5, 5', 5" und der Zirkulationsleitung 4, 7, 7', 7" zeigen die Flussrichtung des in dem Warmwasserzirkulationssystems zirkulierenden Wassers an. In der Nähe des Warmwassererwärmers 2 ist in die Zirkulationsleitung 4 eine Zirkulationspumpe 6 zum Umwälzen des in dem Warmwasserzirkulationssystem sich befindenden Trinkwassers vorgesehen. Der Zirkulationspumpe 6 in Strömungsrichtung vorgelagert ist ein zusätzliches manuelles Ventil 9 in die Zirkulationsleitung 4 eingesetzt.

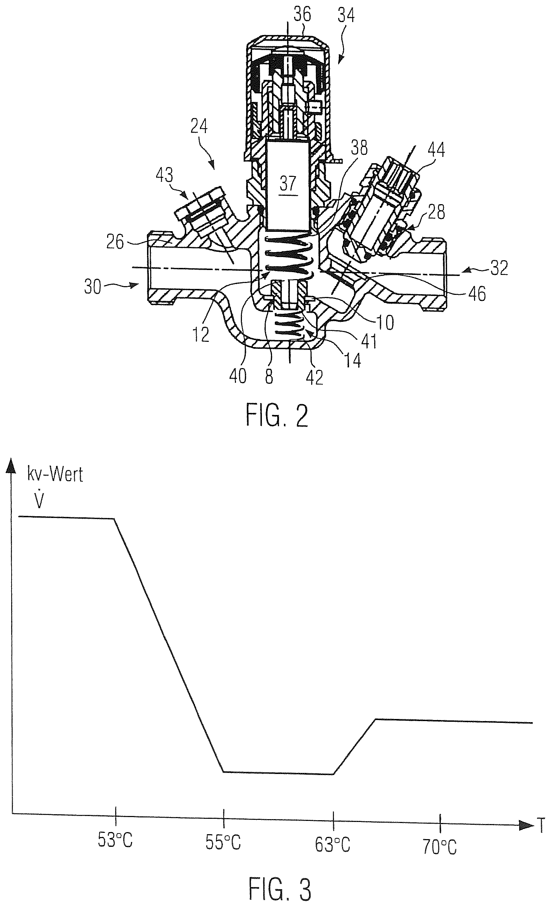

In dem jeweiligen Zirkulationsrohrstrang 7, 7', 7" ist jeweils ein Reguliermodul in Form eines Ventils 24, 24', 24" eingesetzt, welches eine Zirkulationstemperatur (die Temperatur des in dem Kreislauf zirkulierenden Wassers) auf einen vorgegebenen Wert, in diesem Falle von 55 °C, einreguliert. Hierzu ist in dem Ventil 24 (vgl. vergrößerte Darstellung in Figur 2) ein aus einem Ventilkörper 8 und einem mit diesem zusammenwirkenden Ventilsitz 10 gebildetes Ventil vorgesehen, welches über die in Figur 2 dargestellte Federanordnung einer ersten Spiralfeder 12 und einer zweiten Spiralfeder 14 gestellt wird.

Der Ventilkörper 8 wird - wie Figur 2 verdeutlicht - zwischen den beiden Spiralfedern 12 bzw. 14 gehalten und verändert in Abhängigkeit der Federkraft dieser beiden Federn 12, 14 den Durchflusswiderstand, d.h. öffnet in Abhängigkeit des gegen die Federspannung wirkenden Wasserdrucks einen Durchgang zwischen dem Ventilkörper 8 und dem Ventilsitz 10 bzw. verändert dessen Fläche.

Über dieses Ventil kann jeweils unabhängig voneinander der Volumenstrom in den jeweiligen Zuleitungsrohrsträngen 5, 5', 5" bzw. in den jeweiligen Zirkulationsrohrsträngen 7, 7', 7" begrenzt werden, indem der Durchflusswiderstand (kᵥ-Wert, Durchfluss in m³/h bei 1 bar Druckdifferenz) temperaturabhängig automatisch eingestellt wird.

Die Zirkulationspumpe 6 wird so dimensioniert, dass sich zusammen mit den Regulierventilen 24 der jeweils korrekte Volumenstrom einstellt. Gegebenenfalls kann der korrekte Volumenstrom noch über das zusätzliche manuelle Ventil 9 optimal eingestellt werden.

In Figur 2 ist das Ventil 24 im Detail schematisch dargestellt. Dieses weist ein einheitliches Gussgehäuse 26 auf, mit verschiedenen an dem Gussgehäuse 26 vorgesehenen Öffnungen 28 für Funktionselemente sowie einem Einlassstutzen mit einer Einlassöffnung 30 und einem Auslassstutzen mit einer Auslassöffnung 32. Das zuvor bereits beschriebene, über die erste Spiralfeder 12 und die zweite Spiralfeder 14 gesteuerte Ventil erstreckt sich senkrecht (Bewegungsrichtung eines Ventilkörpers 8) zu der Erstreckungsrichtung von Einlass- und Auslassstutzen, die koaxial zueinander vorgesehen sind.

Die erste Spiralfeder 12 ist aus einem SMA-Werkstoff hergestellt, der auf eine Temperaturänderung reagiert, wobei die zweite Spiralfeder 14 eine SMA-Werkstoff-freie Spiralfeder ist (Nicht-SMA-Werkstoff Spiralfeder), die lediglich als Rückstellelement der ersten Spiralfeder 12 dient, die vorliegend aus einem Einweg-Memory-SMA Werkstoff hergestellt ist. Falls ein Zweiweg-Memory-SMA Werkstoff Verwendung findet, kann auf die zweite Spiralfeder verzichtet werden, da sich die erste Spiralfeder 12 in Abhängigkeit der Temperatur auch selbsttätig wieder zurück verformt.

Das Ventil 24 ist in den jeweiligen Zirkulationsrohrstrang 7, 7', 7" eingesetzt und wird von warmem Wasser in Richtung von der Einlassöffnung 30 über einen zwischen dem Ventilkörper 8 und dem Ventilsitz 10 vorgesehenen Durchgang zur Auslassöffnung 32 durchflossen. Dabei muss das warme Wasser immer gegen den Widerstand der ersten Spiralfeder 12 arbeiten, um das Ventil passieren zu können. Ab einer vorherbestimmten Temperatur des durch das Ventil 24 fließenden Wassers, dehnt sich bei steigender Temperatur die erste Spiralfeder 12 aus und der Durchflusswiderstand wird erhöht, so dass bei angenommen konstantem Druck in dem Zirkulationsrohrstrang 7, 7', 7" der Durchfluss durch den Durchgang des Ventils erniedrigt wird.

Je höher die Temperatur des durch das Ventil 24 fließenden Wassers, desto mehr dehnt sich die erste Spiralfeder 12 aus und desto stärker wird der Durchflusswiderstand erhöht, so dass bei angenommen konstantem Druck in dem Zirkulationsrohrstrang 7, 7', 7" der Volumenstrom weiter erniedrigt wird, bis zu einem Punkt, in dem ein Endzustand erreicht ist. In diesem Endzustand dehnt sich die erste Spiralfeder 12 nicht weiter aus, und eine maximale Drosselung des Ventils ist gewährleistet, die vorliegend noch einen minimalen Durchfluss ermöglicht.

Sobald sich die Temperatur des durch das Ventil 24 fließenden Wassers wieder bis zu der zuvor genannten vorgegebenen Temperatur erniedrigt hat, wird der Ventilkörper bzw. die erste Spiralfeder 12 von der zweiten Spiralfeder 14 in die Ausgangsstellung zurückgedrückt, und der Durchflusswiderstand des Ventils wird wieder erniedrigt. Denn durch die temperaturbedingte Änderung der Materialeigenschaften verändert sich auch die Charakteristik der Feder.

Der Durchflusswiderstand und/oder die Ansprechcharakteristik des Ventils kann über ein an sich bekanntes Handbetätigungselement 34 variiert werden.

Durch Drehung an einer außen an dem Ventil 24 vorgesehenen Griffkappe 36 wird beispielsweise, vermittelt über einen Kolben 37, ein erstes Federende 38 der ersten Spiralfeder 12, welches sich an einem Ende des Kolbens 36 abstützt, in dessen Längsrichtung verschoben. Da sich die erste Spiralfeder 12 mit ihrem ersten Federende 38 an den Kolben 36 und mit einem zweiten Federende 40 an dem Ventilkörper 8 abstützt, kann mittels des Handbetätigungselementes 34 der Durchflusswiderstand des Ventils, d.h. die Kraft, mit welcher der Ventilkörper gegen den Ventilsitz 10 drückt, variiert werden. Die zweite Spiralfeder 14 ist vorliegend mit ihrem ersten Federende 41 an dem Ventilkörper 8 befestigt und mit einem zweiten Federende 42 an einer feststehenden Gehäusewand des Gussgehäuses 26.

Im vorliegenden Fall ist die aus dem SMA-Werkstoff hergestellte erste Spiralfeder 12 auslassseitig in dem Ventil (also in Durchflussrichtung gesehen hinter dem Ventilkörper 8) vorgesehen und die zweite SMA-werkstofffreie Spiralfeder 14 eingangsseitig in dem Ventil vorgesehen. Eine entsprechend inverse Konstruktion ist in Abhängigkeit der Einbausituation alternativ bevorzugt. Dies ist zum Beispiel dann der Fall, wenn das Ventil mit steigender Temperatur nicht wie vorliegend den Durchflusswiderstand erhöhen, sondern diesen erniedrigen soll.
Eingangsseitig ist das Gussgehäuse 26 mit einem Anschluss 43 für ein Temperaturmesselement vorgesehen, das insbesondere dann Verwendung findet, wenn über das Handbetätigungselement 34 die vorgegebene Regeltemperatur des Ventils gesteuert werden soll. Um eine vollständige Unterbrechung des Durchflusses in der Zirkulationsleitung 4 zu gewährleisten, was mit dem federgelagerten Ventil nicht möglich ist, ist vorzugsweise ausgangsseitig ein Absperrventil 44 an dem Gussgehäuse 26 eingesteckt vorgesehen, welches mit einem weiteren an dem Gussgehäuse 26 ausgebildeten Ventilsitz 46 zusammen wirkt.
Nachfolgend wird anhand der Figur 3 das Regelverhalten für ein Ausführungsbeispiel eines Ventils mit zumindest zwei miteinander in Wirkverbindung stehenden, jeweils aus einem SMA-Werkstoff hergestellten Federelementen näher erläutert.
Bei dieser Ausgestaltung wird der Durchflusswiderstand ab Erreichen einer vorgegebenen Soll-Temperatur nicht nur bis zum Erreichen einer maximalen Drosselung erhöht, wie es für das in Figur 2 dargestellte und zuvor beschriebene Ventil 24 der Fall war. Vielmehr wird auch ab einer Temperatur des durch das Ventil fließenden Wassers von 63 °C der Durchflusswiderstand nachfolgend wieder erniedrigt, bis ein konstanter, im Verhältnis zum Durchflusswiderstand bei maximaler Drosselung, niedrigerer Durchflusswiderstand erreicht ist.
Dies ist insbesondere vorteilhaft, wenn bei höheren Temperaturen ein höherer Volumenstrom, beispielsweise für eine thermische Desinfektion benötigt wird. Der sich bei Erhöhen der Temperatur erniedrigende Durchflusswiderstand wird beispielsweise in dem Ventil dadurch gewährleistet, dass zusätzlich zu der in Verbindung mit der in Figur 2 beschriebenen Federanordnung aus der ersten und zweiten Spiralfeder 12, 14, eine zweite Federanordnung, bzw. eine einzige weitere Zweiwege-Memory-Effekt-SMA-Feder verwendet wird.

Bei dieser Ausführungsform arbeitet diese weitere Zweiwege-Memory-Effekt-SMA-Feder in umgekehrter Weise wie die Federanordnung nach Figur 2 und weist eine andere Federkonstante auf.

Wie in Figur 3 dargestellt, wird aufgrund eines SMA-Werkstoffs, der auf den Ventilkörper 8 einwirkt, ab einer Temperatur von 53 °C der durch das Ventil 24 fließende Volumenstrom infolge einer Erhöhung des Durchflusswiderstandes in dem Ventil erniedrigt (vgl. Figur 3: kv-Wert wird erniedrigt). Aufgrund der Temperaturerhöhung dehnt sich der SMA-Werkstoff aus und der Durchflusswiderstand wird bis zu der vorgegebenen Zirkulationstemperatur (der Temperatur, mit der das Wasser im optimalen Fall zirkulieren soll), insbesondere 55 °C, erhöht, d.h. der durch die Regulierarmatur 24 fließende Volumenstrom wird erniedrigt.

Bei dieser maximalen Drosselstellung mit einer vorgegebenen Zirkulationstemperatur bis zu 63 °C wird der Durchflusswiderstand konstant gehalten. Ab einer Temperatur von 63 °C wird der Durchflusswiderstand wieder leicht erniedrigt. Diese Erniedrigung des Durchflusswiderstandes beträgt ca. 10% der Differenz der Durchflusswiderstände unterhalb der Temperatur von 53 °C bis zur maximalen Drosselung.

Die Erniedrigung des Durchflusswiderstands bei diesen höheren Temperaturen oberhalb der vorgegebenen Zirkulationstemperatur erlaubt eine gute Desinfektion des gesamten Warmwasserzirkulationssystems.

Die vorgegebene Zirkulationstemperatur liegt vorzugsweise zwischen 50 und 60 °C, insbesondere bei etwa 55 °C. Die vorgegebene Soll-Temperatur, ab der sich der Durchflusswiderstand erhöht, soll maximal 10 °C unter der vorgegebenen Zirkulationstemperatur liegen, vorzugsweise ca. 5 °C, besonders bevorzugt ca. 2 °C unter der vorgegebenen Zirkulationstemperatur.

Die maximale Drosselung soll vorzugsweise maximal 2 °C oberhalb der vorgegebenen Zirkulationstemperatur erreicht werden.

Eine konstante maximale Drosselung soll über einen Temperaturbereich von 10 °C, insbesondere 8 °C, besonders bevorzugt 5 °C gewährleistet sein.

Hiernach soll das Ventil vorzugsweise den Durchflusswiderstand wieder zumindest teilweise erniedrigen, insbesondere soll dies ab 63 °C der Fall sein, wobei ab 70 °C vorteilhafterweise dann ein verminderter, konstanter Durchflusswiderstand eingestellt wird. Auch der zuletzt genannte "Hochtemperatur"-Verstellbereich soll vorzugsweise einen Temperaturbereich von maximal 10 °C, insbesondere 5 °C abdecken, wie es auch für den Verstellbereich zum Erreichen der vorgegebenen Zirkulationstemperatur der Fall ist.

### Bezugszeichenliste

- 2: Wassererwärmer
- 2a, 2b: Verzweigung
- 3: Versorgungsleitung
- 4: Zirkulationsleitung
- 5, 5'5": Zuleitungsrohrstrang
- 6: Zirkulationspumpe
- 7, 7', 7": Zirkulationsrohrstrang
- 8: Ventilkörper
- 9: Manuelles Ventil
- 10: Ventilsitz
- 11: Verbraucher
- 12: Erste Spiralfeder
- 14: Zweite Spiralfeder
- 24, 24', 24": Ventil
- 26: Gussgehäuse
- 28: Öffnung für Funktionselemente
- 30: Einlassöffnung
- 32: Auslassöffnung
- 34: Handbetätigungselement
- 36: Griffkappe
- 37: Kolben
- 38: Erstes Federende der ersten Spiralfeder
- 40: Zweites Federende der ersten Spiralfeder
- 41: Erstes Federende der zweiten Spiralfeder
- 42: Zweites Federende der zweiten Spiralfeder
- 43: Anschluss für Temperaturmesselement
- 44: Absperrventil
- 46: Weiterer Ventilsitz

## Patentansprüche

1. Warmwasserzirkulationssystem mit einem Verbraucher (11) und zumindest einem Wassererwärmer (2), die über ein Ringsystem miteinander verbunden sind, wobei derjenige Teil des Ringsystems vom Wassererwärmer (2) zu dem Verbraucher (11) als Versorgungsleitung (3) und derjenige Teil von dem Verbraucher (11) zurück zu dem Wassererwärmer als Zirkulationsleitung (4) dient, wobei in der Zirkulationsleitung (4) eine Zirkulationspumpe (6) zum Zirkulieren von durch den Wassererwärmer (2) erwärmten Wasser und ein Reguliermodul (24) zur temperaturgesteuerten Regulierung des in der Zirkulationsleitung (3, 4, 5, 5', 5", 7, 7', 7") zirkulierenden Wassers eingesetzt sind, und wobei das Reguliermodul (24) ein aus einem Ventilsitz (10), einem mit dem Ventilsitz (10) zusammenwirkenden Ventilkörper (8) und einem Stellelement (12, 14) zum Stellen des Ventilkörpers (8), gebildetes Ventil enthält,
**dadurch gekennzeichnet, dass**
das Stellelement (12, 14) zumindest einen thermischen SMA-Werkstoff enthält,
dass das Stellelement (12, 14) zumindest ein erstes SMA-Werkstofffederelement (12) enthält, welches derart mit dem Ventilkörper (8) zusammenwirkt, dass der Durchflusswiderstand durch das Ventil in einem ersten vorgegebenen Temperaturbereich mit steigender Temperatur des durch das Ventil fließenden Wassers erhöht wird,
dass das Stellelement (12, 14) ein zweites SMA-Werkstofffederelement enthält, welches derart mit dem Ventilkörper (8) zusammenwirkt, dass der Durchflusswiderstand durch das Ventil, in einem zweiten vorgegebenen Temperaturbereich mit steigender Temperatur des durch das Ventil fließenden Wassers erniedrigt wird,
dass an dem Reguliermodul (24) ein Einstellelement (34) zum Einstellen einer Verstellcharakteristik des Ventilkörpers (8) vorgesehen ist, und
dass das Einstellelement (34) derart auf das erste und/oder zweite SMA-Werkstofffederelement einwirkt, dass der erste und/oder der zweite Temperaturbereich in dessen Weite und/oder in dessen oberen und/oder unteren Grenztemperatur veränderbar ist.

2. Warmwasserzirkulationssystem nach Anspruch 1, **dadurch gekennzeichnet, dass** das Stellelement (12, 14) ein erstes mit dem ersten SMA-Werkstofffederelement (12) zusammenwirkendes Nicht-SMA-Werkstofffederelement (14) enthält, welches derart mit dem ersten SMA-Werkstofffederelement (12) zusammenwirkt, dass dieses in dem ersten vorgegebenen Temperaturbereich bei sinkender Temperatur wieder in seine Ausgangsstellung gebracht wird.

3. Warmwasserzirkulationssystem nach Anspruch 1 oder 2, **dadurch gekennzeichnet, dass** das Stellelement (12, 14) ein zweites mit dem zweiten SMA-Werkstofffederelement zusammenwirkendes Nicht-SMA-Werkstofffederelement enthält, welches derart mit dem zweiten SMA-Werkstofffederelement zusammenwirkt, dass dieses in dem zweiten vorgegebenen Temperaturbereich bei sinkender Temperatur wieder in seine Ausgangsstellung gebracht wird.

4. Warmwasserzirkulationssystem nach einem der vorherigen Ansprüche, **dadurch gekennzeichnet, dass** der erste Temperaturbereich von 40 °C bis 60 °C reicht, insbesondere von 50 °C bis 55 °C und/oder dass der zweite Temperaturbereich bei 60 °C beginnt, vorzugsweise bei 70 °C beginnt.

5. Warmwasserzirkulationssystem nach einem der vorherigen Ansprüche, **dadurch gekennzeichnet, dass** der erste und/oder der zweite Temperaturbereich eine Temperaturdifferenz von 10 °C, vorzugsweise 5 °C nicht überschreitet.

6. Warmwasserzirkulationssystem nach einem der vorherigen Ansprüche, **dadurch gekennzeichnet, dass** der Durchflusswiderstand des Ventils zwischen dem ersten und zweiten Temperaturbereich konstant ist und/oder der Durchflusswiderstand oberhalb des zweiten Temperaturbereichs niedriger ist als der Durchflusswiderstand in dem ersten Temperaturbereich aber höher als unterhalb des ersten Temperaturbereiches.

7. Warmwasserzirkulationssystem nach einem der vorherigen Ansprüche, **dadurch gekennzeichnet, dass** das erste SMA-Werkstofffederelement und/oder das zweite SMA-Werkstofffederelement und/oder das erste Nicht-SMA-Werkstofffederelement und/oder das zweite Nicht-SMA-Werkstofffederelement als Spiralfedern ausgebildet sind.

8. Warmwasserzirkulationssystem nach einem der vorherigen Ansprüche, **dadurch gekennzeichnet, dass** das Einstellelement (34) derart ausgebildet ist, dass eine rotatorische Bewegung in eine translatorische Bewegung übersetzt wird und der Ventilkörper (8) und/oder das erste und/oder zweite SMA-Werkstofffederelement translatorisch in Bezug auf den Ventilsitz (10) verschoben werden, wodurch der Druckwiderstand des Ventils geändert wird.

9. Warmwasserzirkulationssystem nach einem der vorhergehenden Ansprüche, **dadurch gekennzeichnet, dass** das Reguliermodul (24) ein einheitliches Gussgehäuse (26) aufweist mit einem an die Zirkulationsleitung (3, 4, 5, 5', 5", 7, 7', 7") angeschlossenen Einlassstutzen (30) und einem an die Zirkulationsleitung (4) angeschlossenen Auslassstutzen (32).

10. Warmwasserzirkulationssystem nach einem der vorhergehenden Ansprüche, **dadurch gekennzeichnet, dass** das Reguliermodul (24) zumindest ein, insbesondere zwei weitere Funktionselemente, ausgewählt aus der Gruppe Temperaturmesseinrichtung, manuelles Absperrventil, Durchflussmesseinrichtung, Probenahmeventil, Rückschlagventil, aufweist.

## Claims

1. Hot water circulation system comprising a load (11) and at least one water heater (2), which are interconnected by means of a ring system, the part of the ring system that extends from the water heater (2) to the load (11) serving as a supply line (3) and the part that extends from the load (11) back to the water heater serving as a circulation line (4), a circulation pump (6) for circulating water heated by the water heater (2) and a regulating module (24) for regulating the water circulating in the circulation line (3, 4, 5, 5', 5", 7, 7', 7") in a temperature-controlled manner being placed in the circulation line (4), and the regulating module (24) containing a valve formed of a valve seat (10), a valve body (8) that interacts with the valve seat (10), and an actuator (12, 14) for operating the valve body (8),
**characterised in that**
the actuator (12, 14) contains at least one thermal SMA material,
**in that** the actuator (12, 14) contains at least one first SMA material spring element (12), which interacts with the valve body (8) such that the flow resistance through the valve is increased in a first predetermined temperature range when the temperature of the water flowing through the valve is increased,
**in that** the actuator (12, 14) contains a second SMA material spring element, which interacts with the valve body (8) such that the flow resistance through the valve is reduced in a second predetermined temperature range when the temperature of the water flowing through the valve is increased,
**in that** an adjusting element (34) for adjusting an adjustment characteristic of the valve body (8) is provided on the regulating module (24), and
**in that** the adjusting element (34) influences the first and/or second SMA material spring element such that the first and/or second temperature range can be changed with respect to its extent and/or with respect to its upper and/or lower threshold temperature.

2. Hot water circulation system according to claim 1, **characterised in that** the actuator (12, 14) contains a first non-SMA material spring element (14) interacting with the first SMA material spring element (12), which non-SMA material spring element interacts with the first SMA material spring element (12) such that said SMA material spring element is brought back into its initial position in the first predetermined temperature range when the temperature decreases.

3. Hot water circulation system according to either claim 1 or claim 2, **characterised in that** the actuator (12, 14) contains a second non-SMA material spring element interacting with the second SMA material spring element, which non-SMA material spring element interacts with the second SMA material spring element such that said SMA material spring element is brought back into its initial position in the second predetermined temperature range when the temperature decreases.

4. Hot water circulation system according to any of the preceding claims, **characterised in that** the first temperature range is from 40°C to 60°C, in particular from 50°C to 55°C, and/or **in that** the second temperature range begins at 60°C, preferably at 70°C.

5. Hot water circulation system according to any of the preceding claims, **characterised in that** the first and/or second temperature range does not exceed a temperature difference of 10°C, preferably 5°C.

6. Hot water circulation system according to any of the preceding claims, **characterised in that** the flow resistance of the valve between the first and second temperature ranges is constant and/or the flow resistance above the second temperature range is lower than the flow resistance in the first temperature range, but higher than the flow resistance below the first temperature range.

7. Hot water circulation system according to any of the preceding claims, **characterised in that** the first SMA material spring element and/or the second SMA material spring element and/or the first non-SMA material spring element and/or the second non-SMA material spring element are designed as spiral springs.

8. Hot water circulation system according to any of the preceding claims, **characterised in that** the actuator (34) is designed such that a rotational movement is converted into a translational movement and the valve body (8) and/or the first and/or second SMA material spring element is/are moved translationally relative to the valve seat (10), as a result of which the pressure resistance of the valve is changed.

9. Hot water circulation system according to any of the preceding claims, **characterised in that** the regulating module (24) comprises a homogeneous cast housing (26) having an inlet connection (30) connected to the circulation line (3, 4, 5, 5', 5", 7, 7', 7") and an outlet connection (32) connected to the circulation line (4).

10. Hot water circulation system according to any of the preceding claims, **characterised in that** the regulating module (24) comprises at least one, in particular two, additional functional elements, selected from the group consisting of a temperature measuring device, a manual shut-off valve, a flow measuring device, a sampling valve and a check valve.

## Revendications

1. Système de circulation d'eau chaude comprenant un récepteur-consommateur (11) et au moins un réchauffeur d'eau (2), qui sont reliés mutuellement par l'intermédiaire d'un système en boucle, système de circulation d'eau chaude
dans lequel la partie du système en boucle allant du réchauffeur d'eau (2) au récepteur-consommateur (11) sert de conduite d'alimentation (3), et la partie allant du récepteur-consommateur (11) en retour au réchauffeur d'eau sert de conduite de circulation (4),
dans lequel dans la conduite de circulation (4) sont insérés une pompe de circulation (6) pour la circulation de l'eau échauffée dans le réchauffeur d'eau (2), et un module de régulation (24) pour la régulation commandée en fonction de la température, de l'eau circulant dans la conduite de circulation (3, 4, 5, 5', 5", 7, 7', 7"), et
dans lequel le module de régulation (24) comprend une vanne formée par un siège de vanne (10), un corps d'obturation de vanne (8) interagissant avec le siège de vanne (10), et un élément de réglage (12, 14) pour régler la position du corps d'obturation de vanne (8),
**caractérisé**
**en ce que** l'élément de réglage (12, 14) englobe au moins un matériau SMA (alliage à mémoire de forme) thermique, **en ce que** l'élément de réglage (12, 14) comporte au moins un premier élément de ressort en matériau SMA (12), qui interagit avec le corps d'obturation de vanne (8) de manière telle, que la résistance à l'écoulement de passage à travers la vanne soit, dans une première plage de température prédéterminée, augmentée lorsque la température de l'eau s'écoulant à travers la vanne augmente,
**en ce que** l'élément de réglage (12, 14) comporte un deuxième élément de ressort en matériau SMA, qui interagit avec le corps d'obturation de vanne (8) de manière telle, que la résistance à l'écoulement de passage à travers la vanne soit, dans une deuxième plage de température prédéterminée, diminuée lorsque la température de l'eau s'écoulant à travers la vanne augmente,
**en ce que** sur le module de régulation (24) est prévu un élément de réglage (34) pour régler une caractéristique de réglage du corps d'obturation de vanne (8), et
**en ce que** l'élément de réglage (34) agit sur le premier et/ou le deuxième élément de ressort en matériau SMA de manière telle, que la première et/ou la deuxième plage de température puisse être modifiée quant à sa largeur et/ou à sa température limite supérieure et/ou inférieure.

2. Système de circulation d'eau chaude selon la revendication 1, **caractérisé en ce que** l'élément de réglage (12, 14) comprend un premier élément de ressort en matériau non SMA (14) interagissant avec le premier élément de ressort en matériau SMA (12), qui interagit avec le premier élément de ressort en matériau SMA (12) de manière telle, que celui-ci, dans la première plage de température prédéterminée, soit à nouveau ramené dans sa position initiale lorsque la température diminue.

3. Système de circulation d'eau chaude selon la revendication 1 ou la revendication 2, **caractérisé en ce que** l'élément de réglage (12, 14) comprend un deuxième élément de ressort en matériau non SMA interagissant avec le deuxième élément de ressort en matériau SMA, qui interagit avec le deuxième élément de ressort en matériau SMA de manière telle, que celui-ci, dans la deuxième plage de température prédéterminée, soit à nouveau ramené dans sa position initiale lorsque la température diminue.

4. Système de circulation d'eau chaude selon l'une des revendications précédentes, **caractérisé en ce que** la première plage de température s'étend de 40°C à 60°C, notamment de 50°C à 55°C, et/ou **en ce que** la deuxième plage de température démarre à 60°C, de préférence à 70°C.

5. Système de circulation d'eau chaude selon l'une des revendications précédentes, **caractérisé en ce que** la première et/ou la deuxième plage de température ne dépasse pas une différence de température de 10°C, de préférence de 5°C.

6. Système de circulation d'eau chaude selon l'une des revendications précédentes, **caractérisé en ce que** la résistance à l'écoulement de la vanne entre la première et la deuxième plage de température, est constante, et/ou la résistance à l'écoulement au-dessus de la deuxième plage de température est plus basse que la résistance à l'écoulement dans la première plage de température, mais plus élevée qu'en-dessous de la première plage de température.

7. Système de circulation d'eau chaude selon l'une des revendications précédentes, **caractérisé en ce que** le premier élément de ressort en matériau SMA et/ou le deuxième élément de ressort en matériau SMA et/ou le premier élément de ressort en matériau non SMA et/ou le deuxième élément de ressort en matériau non SMA sont réalisés sous la forme de ressorts hélicoïdaux.

8. Système de circulation d'eau chaude selon l'une des revendications précédentes, **caractérisé en ce que** l'élément de réglage (34) est réalisé de manière telle, qu'un mouvement de rotation soit transformé en un mouvement de translation, et que le corps d'obturation de vanne (8) et/ou le premier et/ou le deuxième élément de ressort en matériau SMA soient déplacés en translation par rapport au siège de vanne (10), ce qui fait varier la résistance à la pression de la vanne.

9. Système de circulation d'eau chaude selon l'une des revendications précédentes, **caractérisé en ce que** le module de régulation (24) présente un corps de vanne moulé unitaire (26), qui comporte un embout d'entrée (30) raccordé à la conduite de circulation (3, 4, 5, 5', 5", 7, 7', 7"), et un embout de sortie (32) raccordé à la conduite de circulation (4).

10. Système de circulation d'eau chaude selon l'une des revendications précédentes, **caractérisé en ce que** le module de régulation (24) comprend au moins un, notamment deux autres éléments fonctionnels sélectionnés parmi ceux du groupe constitué par un dispositif de mesure de température, une vanne d'arrêt manuelle, un dispositif de mesure du débit, une vanne de prélèvement d'échantillon, une valve anti-retour.
